Europäisches Patentamt

European Patent Office

Office européen des brevets

(19)

(11) Publication number: **0 070 952**
**A1**

(12)

# EUROPEAN PATENT APPLICATION

(21) Application number: **81810311.1**

(22) Date of filing: **30.07.81**

(51) Int. Cl.³: **F 16 D 23/04**
**C 23 C 15/00**

(43) Date of publication of application:
**09.02.83 Bulletin 83/6**

(84) Designated Contracting States:
**AT BE CH DE FR GB IT LI LU NL SE**

(71) Applicant: **BATTELLE DEVELOPMENT CORPORATION**
**505 King Avenue**
**Columbus Ohio 43201(US)**

(72) Inventor: **Zega, Bogdan**
**67, rue de Lyon**
**CH-1203 Geneva(CH)**

(74) Representative: **Dousse, Blasco et al,**
**7, route de Drize**
**CH-1227 Carouge/Genève(CH)**

(54) **Wear resistant synchronizer ring.**

(57) A synchronizer ring made of brass, steel, sintered iron or like metal having a wear-resistant, metallic film of molybdenum deposited on the working surface of the ring by a high rate cylindrical magnetron sputtering process.

*FIG. 2*

EP 0 070 952 A1

Croydon Printing Company Ltd

COMPLETE DOCUMENT

- 2 -

## Background of the Invention

### Field of Invention

The synchronizer rings currently utilized in the manual transmissions of many vehicles, are subject to extreme wear along the working surface. Many different ring materials and coatings are employed to improve the wear resistance of these rings.

### Description of the Prior Art

The synchronizer rings widely utilized are typically hollow cylinders made of sintered iron, and are about 60 mm. in diameter and 8 mm. in height. Most often these rings have an internal working surface which is slightly frustoconical in shape (typically 6°-30') and rubs against a carbo-nitrided counterpiece when the gear is engaged.

As the hardness and the wear-resistance of the sintered iron is inadequate, the working surface is coated with a wear-resistant metal, often molybdenum by the flame spraying method. As sintered, these rings have large tolerance variations in both roundness and diameter. The rings have to be sandblasted before the flame spraying to improve adhesion. After the coating the surface is rough and has to be machined away. Very heavy coatings are applied so that the machined surface will remain within dimensional tolerance (up to 0.6 mm.). Excessive amounts of the coating are lost in the spraying process and during the subsequent machining, often up to 50%.

The German patent DT 2,433,814 discloses a wear-resistant coating using molybdenum alloyed or mixed with certain metals (e.g. nickel, cobalt, iron), whereas the molybdenum contains silicon and one or more of the following elements: oxygen, nitrogen, carbon, and hydrogen. The coatings are applied to the running surfaces of engine components such as piston rings, bushings, seal bands, pins and strips in rotary engines. The molybdenum

- 3 -

powder alloy or mixture is applied with a flame gun while the carbide components are simultaneously applied with a plasma spray gun.

The French patent FR 2,073,831 discloses a synchronizer ring coated with copper, titanium, molybdenum or similar materials forming a thin friction layer either on the internal surface of the synchronizer ring and/or the surface of the braking part that interacts with the ring. Although the patent prefers the use of titanium, when molybdenum is used it is applied with a flame spray gun.

The German patent DT 2,433,814 discloses a technique for flame spraying the inner surface of synchronizer rings of vehicle transmissions with a thin, wear resistant, metal coating of molybdenum or molybdenum alloy.

Vacuum deposition is a highly attractive means of producing uniform films since when the particles nucleate and coalesce on the substrate surface, they flow in a liquid-like manner into an interlinking network of particles that grows into a single continuous film of relatively uniform thickness. Sputtering is a vacuum deposition process whereby a material is removed from a target and is carried by a plasma and deposited onto a substrate. However, sputtering is not widely used in industrial applications, at least partially because it is not as fast as other deposition processes. Magnetic fields that generally traverse the electric field of the sputtering system, can be used to improve the sputtering rate.

Several cylindrical magnetron systems are available that can be used to coat these rings. Schiller, Heisig, and Goedicke, "On the Use of Ring Gap Discharges for High-Rate Vacuum Coating", Journal of Vacuum Science Technology, Vol. 14, No. 3, (1977) pages 815-818 disclose

- 4 -

their ring gap system for the inside deposition of a
tubular substrate using several parallel and concentric
cylindrical magnets. (See also "High-Rate Sputtering
with a Torus Plasmatron" paper presented on the 7th
International conference on Electron and Ion Beam Science
and Technology, May 1976; Electrochemical Society Inc.).
N. Kuriyama in patents U.S. 4,221,652, JA 51-117 933, and
DT 2.655.942 discloses a cylindrical magnetron for depositing molybdenum and other target materials on conductive or nonconductive flat plates arranged in a circular concentric fashion about the target. The magnetron
assembly appears to be an elongated ring that provides a
single toroidal electron-trapping region in the immediate
vicinity of the cylindrical target to be sputtered. Thor-
ton in "Internal Stresses in Titanium, Nickel, Molybdenum, and Tantalum Films Deposited by Cylindrical Magnetron Sputtering", Journal of Vacuum Science Technology,
Vol. 14, No. 1 (1977), pages 164-168, and in "Influence of
Apparatus Geometry and Deposition Conditions on the
Structure and Topography of Thick Sputtered Coatings",
Journal of Vacuum Science Technology, Vol. 11, No. 4
(1974), pages 666-670, discusses the deposition of molybdenum coatings by cylindrical magnetron sputtering onto
glass and metallic standard planar substrates. However,
the sputtering apparatus is a post magnetron which is
similar to the Penning type apparatus wherein the uniform
axial magnetic field generated by a Helmholtz type coil is
disposed outside the vacuum chamber  This system is
inoperative for coating ferromagnetic synchronizer rings
but can be used to coat brass rings.

It is the purpose of this invention to disclose
a wear-resistant synchronizer ring with a much thinner and
uniform coating on its working surface, utilizing magnetically enhanced sputtering that will optimize the use of
the molybdenum. This new ring will consume only a fraction

- 5 -

of the molybdenum used on a flame sprayed ring: conservatively estimated at 1/10. Also, a thinner more flexible layer will better follow irregularities of the common substrate surface which will reduce internal stresses in the ring.

## Summary of the Invention

The invention as herein disclosed is a vehicle transmission synchronizer ring, sometimes referred to as a blocker ring, which has superior wear properties and also minimizes the use of the molybdenum. The ring substrate is made of brass, bronze, steel, sintered iron, a forge copper-zinc alloy, or like material and has a uniform, metallic wear resistant molybdenum film deposited on the working surface of the ring. The ring is about 60 mm. in diameter and 8 mm. in height. The film thickness is in the range from 5 to 25 microns thick and is deposited by a high rate, cylindrical magnetron sputtering process.

Sputtering is a process in which charged particles are removed from a target, are carried through space, and deposited onto a substrate. A cylindrical magnetron sputtering process employs cylindrical components and magnetic fields that transverse the electric field at sputtering target surfaces to make more efficient use of the ejected particles which strike and condense on the substrate surface.

If the film is to be applied to the internal working surface of the synchronizer rings, the tubular target is located inside a stack of rings, which are stacked in an alternating manner every other ring being inverted, so as to obtain a substantially continuous working surface despite the slight taper of the rings. The magnet assembly is located inside the tubular target.

If the film is to be applied to the external working surface of the synchronizer rings, a different

- 6 -

style of magnetron must be used. The magnet assembly must be located concentrically about the tubular target, which surrounds the stack of rings to be externally coated.

The sputtering occurs simultaneously onto the plurality of stacked rings, the stack being anodically biased with respect to the target.

The ring substrate is usually brass, steel, sintered iron, a forged copper-zinc alloy, or like material.

A molybdenum film includes either a pure molybdenum or substantially pure molybdenum material.

## Brief Description of the Drawings

The accompanying drawings are diagrammatic illustrations of one embodiment of the present invention and the preferred apparatus for making the present invention.

FIG 1 is a sectional view of an apparatus for coating a pluality of synchronizer rings, one of which is shown in FIG 2.

FIG 2 is an isometric view of a synchronizer ring with an internal working surface.

FIG 3 is an isometric view of the magnetron assembly of the apparatus shown in FIG 1.

FIG 4 is an isometric view similar to FIG 3 showing the outside of the cathode.

## Detailed Description of the Invention

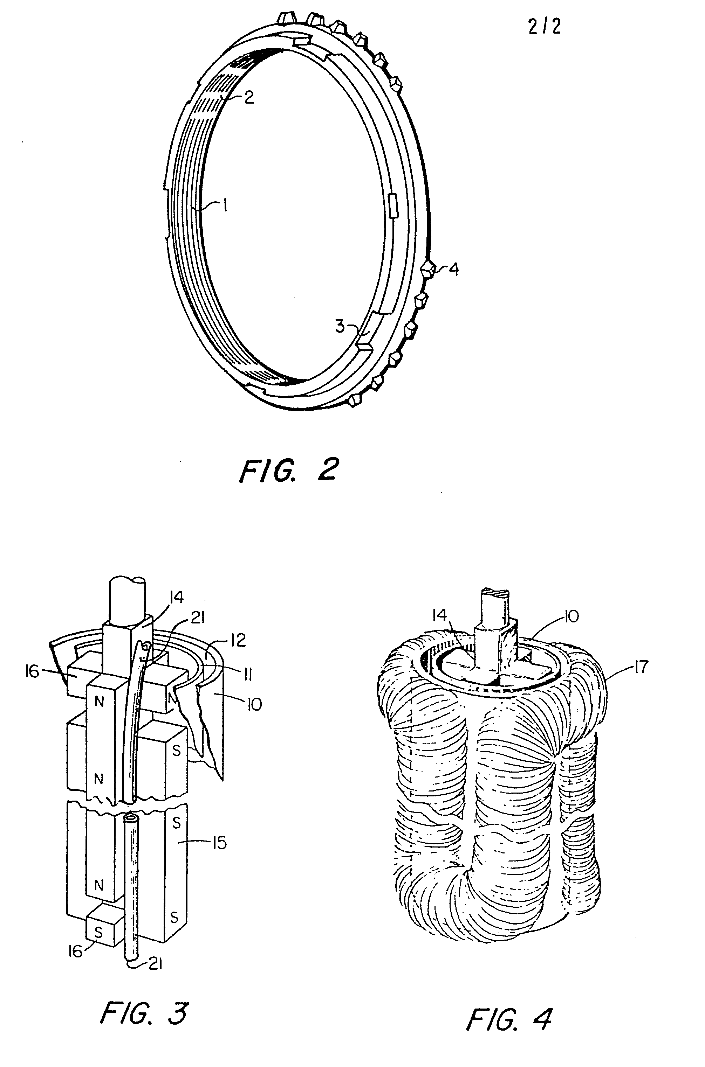

FIG 2 shows an isometric view of a synchronizer ring, that is slightly frustoconical in shape (about 6°-30') and has an internal working surface that rubs against the carbo-nitride treated counterpiece. The threads 1 on the internal working surface of the ring provide scraping edges to quickly wipe the oil from the gear cone, and provide spiral grooves into which the oil can escape. The wiping grooves 2 aid in the removal of oil from the gear cone and allow for a rapid rise in the coefficient of friction. Three struts (not shown) are energizing elements that provide the initial load for indexing the ring. The struts ride in three ring slots 3 and move the ring into the indexed position. The slot width controls the amount of indexing. The ring chamfers 4 are angular surfaces on the periphery of the ring which align axially and circumferentially with the sleeve chamfers to establish a blocking action and produce synchronization.

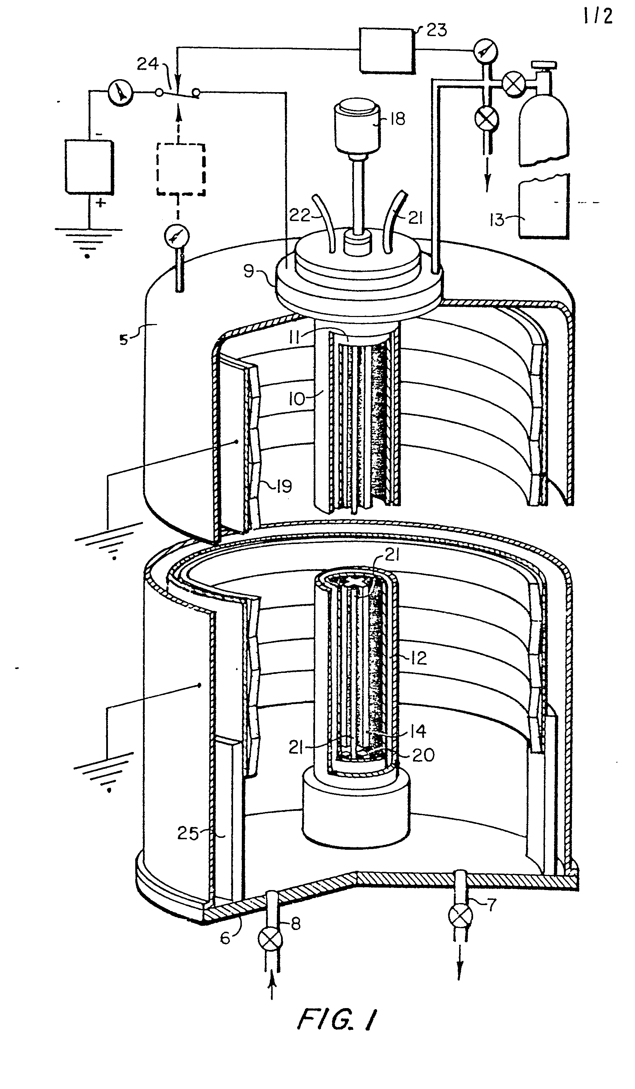

The cylindrical sputtering magnetron as shown in FIGS 1, 3, 4, and 5 comprises a bell jar 5, cooperating with a base plate 6 to form a sealed enclosure. The base plate 6 is provided with an evacuation port 7 that is connected to a suitable pumping device (not shown) and with an admission port 8 which is connected to a source of an appropriate inert gas such as argon.

Through a circular opening in the top of the bell jar 5 is introduced a magnetron mounting assembly 9. On the outside of the mounting assembly 9 is a cylindrical target 10 which is made of the material to be sputtered (molybdenum) and which is the cathode. Next to the target 10 is a tubular sheath 11, which together with the target 10 forms an annular, tight chamber 12 (which is exaggerated in the drawing) between 0.1 and 0.3 mm. thick. The chamber is connected through the mounting assembly 9 to a supply 13 of high thermal conductivity gas (such as helium).

Inside the tubular sheath 11 is a magnet assembly 14, which can be better seen in the perspective view of FIG 3, and is composed of a plurality of elongated magnets 15 and end magnets 16. The magnets are arranged such that the superposed magnetic flux forms a single closed-loop arch 17 (see FIG 4) extending in a meandering manner over the outer sputtering face of the cylindrical target 10.

- 8 -

The upper end of the magnet assembly 14 is connected to the shaft of a motor 18, designed to slowly rotate the magnet assembly 14 in a back and forth movement which will cause uniform sputtering of the target 10 and a uniform coating on the substrate 19. The substrate 19 is the plurality of synchronizer rings stacked in a manner whereby every other ring is inverted and supported by mounting bracket 25, which is connected to ground, as is the bell jar 5.

Between the magnet assembly 14 and the tubular sheath 11 is a space for a circulating liquid coolant 20 such as cold water. The coolant system has an admission port 21 and an evacuation port 22.

The above apparatus also comprises a control circuit 23 which is connected on one side to the gas supply 13 and is connected on its output side to a switch 24. The control circuit 23 is designed to open the switch 24 at the termination of a sputtering run, as soon as the gas supply pressure undergoes a sudden change with respect to a predetermined valve resulting from the erosion of the metal target (as hereinafter described).

Description of Preferred Embodiments

The magnet assembly 14 (see FIG 3 and FIG 4) that is preferred to produce the best film has a small overall diameter (about 30 mm.) and consists of a plurality of elongated magnets 15 and end magnets 16 so situated relative to each other as to generate over the sputtering face of the target 10, a plurality of magnetic flux arch portions which define one closed loop arch path 17. The design ensures excellent target cooling, whatever the target length, since the liquid coolant can freely circulate along the longitudinal spaces.

In order to obtain a uniform target sputtering and substrate coating, the cylindrical magnetron sputtering system will have means for axially rotating the magnet assembly 14 and the tubular target relative to each other (so as to cause a substantially uniform sputtering of said target, and improve target life) as well as for axially rotating the magnet assembly and the substrate relative to each other (so as to cause a substantially uniform coating of said substrate).

The magnets are designed for generating magnetic flux with arcuate end-portions which are connected in an alternate manner to the straight portions, so as to define a single closed-loop flux 17 extending in a meandering manner over the entire circumference of the sputtering face of the tubular target 10. The magnetron design ensures good uniformity of target sputtering and substrate coating because of the formation of a single meandering flux results in a plasma current which is proved to be relatively uniform along its whole path (because of the trapped electrons circulating along a single plasma).

The rings to be coated will be stacked in a vertical and alternating manner, every other ring being inverted, so as to obtain a substantially continuous surface despite the slight taper of the rings. Stacks can have large numbers of rings, but for practical purposes are limited to about 60 to 75 rings, the combined height not to exceed about 60 cm.

A heavy inert gas, such as argon, is used as the gas atmosphere inside the vacuum chamber. To improve the coating adhesion, the rings are initially subjected to ion bombardment by biasing them negatively at a more elevated argon pressure ($10^{-2}$ Torr) and grounding the magnetron. After about five minutes the polarity will be reversed, and the pressure reduced to about $5 \times 10^{-3}$ Torr, where magnetrons typically operate.

- 10 -

The magnets are chosen to generate magnetic fields in the range of 300 to 800 Ørsteds.

The cylindrical magnetron sputtering cathode and apparatus of the present invention may furthermore, in function of the different envisaged coating applications, be designed so as to assume one of the following configurations:

1. an apparatus with a central cylindrical sputtering cathode, designed for coating the internal surface of the stacked ring substrates disposed concentrically outside the central cathode. The central sputtering cathode will consist of a tubular target having its outer face acting as the sputtering face, the magnetron being inserted inside the tubular target; or

2. an apparatus with a hollow cylindrical sputtering cathode, (inverted magnetron) designed for coating the exterior surface of the stacked ring substrates inserted axially inside the hollow cathode. The hollow sputtering cathode will in such a case consist of a tubular target having its inner face acting as the sputtering face, the magnetron being therefore circumferentially arranged around the outer face of said tubular target.

The cylindrical magnetron cathode is arranged against a tubular intermediate support inserted between the tubular target and the magnetron, to define a tight chamber of low thickness to be used in a liquid cooling circuit.

It may thus be seen that one of the essential features of the magnetron lies in the interposition of a relatively thin layer of a stagnant gas with a high thermal conductivity between the conventional liquid cooling circuit and the back of the sputtering target, the function of which is essentially of enabling the consumption of said target up to its piercing without causing any damage

- 11 -

to the sputtering apparatus or to the ring substrates being coated, while further providing a sufficient target cooling throughout its sputtering.

Such interposition of an additional stagnant gas layer enables a totally harmless detection of the exact instant of piercing of the sputtering target. This piercing will result in a simple irruption of gas inside the vacuum bell jar, which can then be detected for immediate automatic cut-off of the sputtering apparatus - thereby enabling an optimal consumption of the target, and complete automatization of the apparatus (except for replacing the eroded target).

For enabling the above detection, the pressure of said interposed stagnant gas layer (1 to 10 Torr) must be substantially higher than that in the vacuum bell jar of ($10^{-4}$ to $10^{-2}$ Torr) so as to yield detectable pressure variations at the time of the target piercing. This pressure must not be too high, so as to avoid any risk of premature target piercing when the target becomes progressively thinner.

The interposition of the stagnant gas layer between the sputtering target and the liquid coolant circuit furthermore ensures a sufficient target cooling throughout its sputtering, if the selected gas has a high thermal conductivity over the thin layer, which therefore allows a heat flow through said gas layer which will maintain the temperature of the sputtering target within an acceptable range.

In spite of the high power dissipation at the target (20 Watt/cm$^2$), the temperature of said target may be easily kept below the maximum permissible values ($500^{o}$C), by choosing, for the interposed stagnant gas layer, some gases having sufficiently high thermal conductivities such as helium (k = 333 x $10^{-6}$ cal/sec x cm x $^{o}$C at 20$^{o}$C), hydrogen (k = 405 x $10^{-6}$ cal/sec x cm x $^{o}$C at

$20^{\circ}$C), neon (k = 107 x $10^{-6}$), etc., together with gas layers having sufficient low thicknesses, (0.1 to 0.3 mm) and pressure sufficient to reach the given specific thermal conductivity at the given layer thickness, example: this pressure is for He about 1 Torr.

The deposition rate is from 0.5 to 1 micron per minute. To produce a film of about twenty microns, plus ion-etching and pumping down, will require about thirty minutes. A reduction in the power of the magnetron will reduce the deposition rate.

Brass rings involve additional complications. Since brass is not ferromagnetic, a number of cylindrical magnetrons that could not be used with sintered iron or steel, are available. For example, the post magnetron will not work with iron or steel because the substrate shields the external magnetic field: the stack of magnetic rings shatters the external magnetic field. The working surface of brass is cold worked to induce hardness properties. When the brass ring is heated beyond 200 to $250^{\circ}$C, the ring will lose this induced hardness. Hence, one way to limit the substrate temperature is to cool the sputtered target, thereby minimizing the substrate heating by radiation. Another and very efficient way is to clamp the stack of rings within a water-cooled copper block, split in two or three segments, ensuring a good thermal contact against the external cylindrical surface of the rings.

Examples

Tests were performed with a simulated manual transmission. Note that a 2-3-2 cycle consists of a shift from second gear to third gear and back again to second gear. An uncoated brass ring goes 8000 to 10,000 cycles. Two production Model T18 units were rebuilt by installing coated blocker rings. The ring substrate was bronze with a molybdenum coating on the internal working surface. The units were vehicle tested for shiftability and break-in, and were installed on a cycle stand and tested as follows:

Oil-Production Union M2C-83C (80/90 weight) Input shaft - 4000 rpm

Inertia clutch disc - 3.0 gm-m/sec$^2$

Calculated collar load - 112 kg

- 13 -

Frequency - 15 cycles/min

Sump temperature - 77°C

Blocker Ring #T19-14

Unit #1

| Ring Diameter | Coating Thickness | Total Cycles | Remarks |
|---|---|---|---|
| 3" thread (2nd gear) | 14 microns | 50,000 (2-3-2) | 0 to 2 micron tip wear. Even wear full width. Excellent cone seat. |
| 2-11/16" (3rd gear) | 16 microns | 100,000 (combined) | 2 to 4 micron thread tip wear. 1/2 width moly wear on larger end. Good cone seat. |
| 2-11/16" (4th gear) | 16 microns | 50,000 (3-4-3) | 2 to 6 micron thread tip wear. 1/2 width moly wear on larger end. Cone seat good. |

The cycles were completed with no problems. Vehicle test after cycling demonstrated good shiftability. Inspection showed that all parts were in good condition. It was noted that the 2 11/16" rings had worn the molybdenum coating off the large diameter ends about one-half the width. This wear is consistent to production rings and is caused by ring deflection by the three strut slots. Cone seats, gear and collar tooth chamfers were in good usable condition.

As a result of these first tests, the test was repeated with a thinner molybdenum coating. The film thickness was nearly halved in an attempt to produce a ring

- 14 -

that would withstand 25,000 cycles and at the same time decrease unit cost.

### Unit #2

| Ring Diameter | Coating Thickness | Total Cycles | Remarks |
|---|---|---|---|
| 3" (2nd gear) | 8 microns | 25,000 (2-3-2) | moly pick-up on cone thread tips badly worn. |
| 2-11/16" (3rd gear) | 9.5 microns | 25,433 (combined) | failed 3-4-3 into third. Moly pickup on cone 25% of moly worn off scattered full width of ring |
| 2-11/16" (4th gear) | 9.2 microns | 433 (3-4-3) | moly pick-up on cone moly worn off full width of ring, threads flattened |

These synchronizer rings were coated with less molybdenum. The vehicle test prior to cycling was acceptable. The cycle test completed 25,000 cycles of the 2-3-2 sequence, but failed on the 3-4-3 sequence by clashing into third after 433 cycles. Inspection showed gear cone seats had picked up molybdenum from the rings and all ring thread tips were wearing. Except for the cone seat pickup, the parts were in good condition.

The reason that the fourth gear failed at 433 cycles is not known. The thinner coating could be a factor. It has since been discovered that the manufacturer of the uncoated bronze ring was producing rings with random distortions which resulted in wear problems. In any event, a molybdenum film on the working surface of the

- 15 -

synchronizer ring yields a ring that has improved wear properties.

It is not intended herein to mention all of the possible equivalent forms of the invention. It is to be understood that the terms used herein are merely description rather than limiting. It is herein understood that although the present invention has been specifically disclosed with preferred embodiments, and examples, many other modifications and variations of the concepts herein disclosed may be resorted to by those skilled in the art, which are 'considered to be within the scope of the invention and the appended claims.

We Claim:

1. A vehicle transmission, synchronizer ring comprising:

    a. a synchronizer ring substrate; and

    b. a uniform, wear-resistant metallic film of molybdenum deposited thereon by a cylindrical magnetron sputtering process.

2. A synchronizer ring as recited in Claim 1 wherein the synchronizer ring substrate is made from bronze, steel, brass, sintered iron, or forged copper-zinc alloy.

3. A synchronizer ring as recited in Claim 1 wherein the metallic film thickness is in the range of from about 5 to 25 microns.

4. A synchronizer ring as recited in Claim 1 wherein the metallic film is applied to the exterior surface.

5. A vehicle transmission synchronizer ring having a wear-resistant film deposited upon the internal ring surface, comprising:

    a. a frustoconical synchronizer ring substrate; and

    b. a uniform, wear-resistant film of molybdenum deposited upon the internal ring surface by a cylindrical magnetron sputtering process, whereby a plurality of synchronizer rings are stacked every other ring being inverted, the rings being concentrically located about a tubular target and a cylindrical magnetron being located concentrically within the target.

FIG. 1

0070952

2/2

FIG. 2

FIG. 3

FIG. 4

European Patent
Office

**EUROPEAN SEARCH REPORT**

**0070952**

Application number

EP 81 81 0311

## DOCUMENTS CONSIDERED TO BE RELEVANT

| Category | Citation of document with indication, where appropriate, of relevant passages | Relevant to claim |
|---|---|---|
| Y | DE - A - 2 055 345 (ZAHNRADFABRIK FRIEDRICHSHAFEN) <br> * Entire document * | 1,2,4, 5 |
| YD | US - A - 4 221 652 (KURIYAMA) <br> * Whole document * | 1,2,4, 5 |
| Y | GB - A - 1 556 664 (AB VOLVO) <br> * Totality * | 1,5 |
| A | DE - A - 1 815 372 (DAIMLER BENZ) | |
| AD | DE - B - 2 433 814 (GOETZEWERKE) | |
| AD | FR - A - 2 073 831 (PORSCHE KG) | |

**CLASSIFICATION OF THE APPLICATION (Int. Cl. 3)**

F 16 D 23/04
C 23 C 15/00

**TECHNICAL FIELDS SEARCHED (Int.Cl. 3)**

F 16 D 23/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 16-03-1982 | BALDWIN |

EPO Form 1503.1  06.78